# EUROPEAN PATENT APPLICATION

(11) **EP 4 764 868 A1**
(43) Date of publication of application: **24.06.2026**
(21) Application number: 24220903.9
(22) Date of filing: 18.12.2024
(51) Int. Cl.: G06F 11/3668, G06N 3/045, G06N 3/08, G06F 11/30, G06F 11/34

(54) **A METHOD FOR SYNTHETIC SENSOR DATA GENERATION**

(71) Applicant: Zenseact AB, 417 56 Gothenburg (SE)
(72) Inventor: GYLLENHAMMAR, Magnus, 435 43 Pixbo (SE); TONDERSKI, Adam, 417 51 Göteborg (SE); HESS, Georg, 413 25 Göteborg (SE); PETERSSON, Christoffer, 426 58 Västra Frölunda (SE); LUVÖ, Thomas, 443 60 Stenkullen (SE)
(74) Representative: Zacco Sweden AB

(57) **Abstract**

The herein disclosed technology relates to synthetic sensor data generation. More specifically, the disclosed technology at least partly relates to a computer-implemented method (100) for synthetic sensor data generation using a scenario database, wherein the scenario database comprising a plurality of scenario samples, each scenario sample comprising sensor data depicting a surrounding environment of a vehicle over a period of time, wherein each scenario sample is associated with a scenario embedding representing the scenario sample in a multi-dimensional space, wherein each scenario embedding is associated with a transformation volume in the multi-dimensional space, wherein the transformation volume is indicative of a set of possible transformed scenarios that can be generated from the corresponding scenario sample. The method (100) comprising: obtaining (5102) a request specifying a query scenario, wherein the query scenario is associated with a query embedding representing the query scenario in the multi-dimensional space; identifying (S106), within the scenario database, at least one scenario sample having a transformation volume within which the query embedding is located; and in response to successfully identifying the at least one scenario sample, generating (5108) synthetic sensor data corresponding to the query scenario by transforming the sensor data of the at least one identified scenario sample to synthetic sensor data having an associated scenario embedding in the multi-dimensional space within a threshold distance from the query embedding.

## Description

### TECHNICAL FIELD

The present disclosed technology relates to the field of automated driving systems. In particular, it is related to methods and devices for synthetic sensor data generations using an existing scenario database.

### BACKGROUND

One of the central tenets for verification and validation of Automated Driving Systems (ADSs) is the use of scenario-based testing. Such testing is used to systematically evaluate the system's performance across a wide range of driving scenarios, including rare and challenging situations that are statistically possible, but would require intractable amounts for real world driving to experience. These scenarios are important for exposing the potential system weaknesses and ensuring robustness in diverse and unpredictable environments.

Traditionally, scenario-based testing has focused on the decision-making and control components of the ADS, as these systems can be tested with reliably generated inputs, such as pre-recorded trajectories or simulated vehicle behavior. However, this approach excludes the perception system, which is a vital subsystem responsible for interpreting raw sensor data understand the environment surrounding the ego-vehicle. Omitting the perception system limits the comprehensiveness of testing and reduces the usefulness and generalizability of the results.

To address this, re-simulation of previously captured sensor sequences has been proposed. This involves re-processing recorded sensor data through the perception system to test its response. While effective for validating common scenarios, this method is inherently limited to common and non-rare scenarios that have already been experienced and collected. Additionally, the sheer volume of raw sensor data collected during ADS operation poses significant challenges for storage and sharing due to bandwidth and cloud infrastructure constraints.

An alternative approach involves using high-fidelity simulations or synthetically rendered sensor data to create scenarios that are difficult to capture in the real-world. While this method enables the generation of rare and diverse situations, its effectiveness is hampered by uncertainties regarding the fidelity of synthetic data and its ability to accurately replicate real-world sensor stimuli.

There is therefore a growing need for new and improved methods to produce reliable, valid, high-quality data for unseen and rare scenarios. Such methods would enable comprehensive testing of all ADS subsystems, including perception, and support a wide range of development and validation activities.

### SUMMARY

The herein disclosed technology seeks to mitigate, alleviate or eliminate one or more of the above-identified deficiencies and disadvantages in the prior art to address various problems relating to synthetic sensor data generation. More specifically, the disclosed technology addresses the issue of producing valid, reliable and accurate data of rare or unseen scenarios for ADS development, with the additional effect of enabling for sparser data collection while reliably exhausting the space of possible scenarios. The proposed solution further enables querying of new scenarios. Various aspects and embodiments of the disclosed technology are defined below and in the accompanying independent and dependent claims.

According to a first aspect, there is provided a computer-implemented method for synthetic sensor data generation using a scenario database. The scenario database comprises a plurality of scenario samples, each scenario sample comprising sensor data depicting a surrounding environment of a vehicle over a period of time. Each scenario sample is associated with a scenario embedding representing the scenario sample in a multi-dimensional space. Each scenario embedding is associated with a transformation volume in the multi-dimensional space. The transformation volume is indicative of a set of possible transformed scenarios that can be generated from the corresponding scenario sample. The method comprises obtaining a request specifying a query scenario. The query scenario is associated with a query embedding representing the query scenario in the multi-dimensional space. The method further comprises identifying, within the scenario database, at least one scenario sample having a transformation volume within which the query embedding is located. The method further comprises, in response to successfully identifying the at least one scenario sample, generating synthetic sensor data corresponding to the query scenario by transforming the sensor data of the at least one identified scenario sample to synthetic sensor data having an associated scenario embedding in the multi-dimensional space within a threshold distance from the query embedding. With this aspect of the disclosed technology, similar advantages and preferred features are present as in the other aspects.

According to a second aspect, there is provided a computer program product comprising instructions which when the program is executed by a computing device, causes the computing device to carry out the method according to any embodiment of the first aspect. According to an alternative embodiment of the second aspect, there is provided a (non-transitory) computer-readable storage medium. The non-transitory computer-readable storage medium stores one or more programs configured to be executed by one or more processors of a processing system, the one or more programs comprising instructions for performing the method according to any embodiment of the first aspect. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a third aspect, there is provided a computing device for synthetic sensor data generation using a scenario database. The scenario database comprising a plurality of scenario samples. Each scenario sample comprising sensor data depicting a surrounding environment of a vehicle over a period of time. Each scenario sample is associated with a scenario embedding representing the scenario sample in a multi-dimensional space. Each scenario embedding is associated with a transformation volume in the multi-dimensional space. The transformation volume is indicative of a set of possible transformed scenarios that can be generated from the corresponding scenario sample. The computing device comprises control circuitry. The control circuitry is configured to obtain a request specifying a query scenario. The query scenario is associated with a query embedding representing the query scenario in the multi-dimensional space. The control circuitry is further configured to identify, within the scenario database, at least one scenario sample having a transformation volume within which the query embedding is located. The control circuitry is further configured to, in response to successfully identifying the at least one scenario sample, generate synthetic sensor data corresponding to the query scenario by transforming the sensor data of the at least one identified scenario sample to synthetic sensor data having an associated scenario embedding in the multi-dimensional space within a threshold distance from the query embedding. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that more exhaustive scenario-based development of ADS functions can be more readily available and enabled in a more efficient way. By performing more exhaustive scenario-based testing and validation, the robustness and reliability of the ADS, across a wider range of scenarios, can be achieved.

An advantage of some embodiments is that synthetic sensor data can be produced in a dependable way, by considering the transformation volumes of existing scenario samples.

An advantage of some embodiments is that the need for data transmission from a fleet of vehicles can be reduced, while still enabling accurate and reliable testing of the ADS. This is due to the fact that less raw sensor data is needed to exhaust the scenario space.

An advantage of some embodiments is that it enables scenarios that are close to already collected data, but may take months/years to collect from driving in the real-world, to be generated.

An advantage of some embodiments is that the scenario space can be exhausted through with less collected data.

An advantage of some embodiments is that more realistic synthetic sensor data of simulated scenarios, rendered through a simulation engine, can be generated. This may further increase the usability of the scenario samples for the development of the ADS.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Figure 1 is a schematic flowchart representation of a method, in accordance with some embodiments;
Figure 2 is a schematic illustration of a computing device, in accordance with some embodiments;
Figure 3 is a schematic illustration of a vehicle, in accordance with some embodiments;
Figure 4 illustrates, by way of example, a mapping between scenario samples and a multi-dimensional space;
Figure 5 illustrates, by way of example, scenario samples in a multi-dimensional space;
Figure 6A and 6B illustrates, by way of example, how a scenario space can be filled.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first machine learning model could be termed a second machine learning model, and, similarly, a second machine learning model could be termed a first machine learning model, without departing from the scope of the embodiments. The first machine learning model and the second machine learning model are both machine learning model, but they are not the same machine learning model.

As used herein, the wording "one or more of" a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "one or more of A, B and C" may be interpreted as A or B or C, A and B and C, A and B, B and C, or A and C.

As used herein, the term "in response to" may be construed to mean "when" or "upon" or "if" depending on the context. Similarly, the phrase "in response to successfully [identifying the at least one scenario sample]" may be construed as "when it has been determined that the at least one scenario sample has been identified", "in an instance of the at least one scenario sample has been identified", "upon the at least one scenario sample having been identified", or similar.

### Overview

As explained in the foregoing, the disclosed technology relates to synthetic data generation for development of automated driving systems (ADSs). More specifically, it can be used for producing valid, reliable and accurate data of unseen scenarios using a database of existing scenarios. The disclosed technology enables depleting or exhausting the space of possible scenarios in a more efficient manner than simply relying on a vehicle fleet to experience all possible scenarios. The technology relies on the fact that small perturbations or transformations of recorded sensor data can be carried out, while achieving desirable dependability of the generated synthetic sensor data. Dependability in this context, refers to the generated synthetic sensor data appearing realistic (i.e. look and feel like real sensor data) to a perception system applied to the synthetic sensor data. For instance, it is desirable to have similar output from the perception system when applied to real or synthetic data, given they depict the same scene. The dependability of the synthetic sensor data may refer to a number of different aspects, which can indicate an overall quality and trustworthiness of the synthetic sensor data in representing real-world scenarios, and supporting robust and reliable testing and development of ADSs (or any sub-system thereof). The dependability may e.g. encompass validity, reliability, and/or accuracy of the synthetic sensor data. In other words, the dependability may be seen as an umbrella term of one or more aspects. More specifically, the validity may refer to an extent to which the synthetic sensor data reflects (or aligns with) the characteristics of real-world sensor data or scenario. In other words, it may be a measure of how trustworthy the synthetic sensor data is for its intended purpose without introducing artifacts or inconsistencies that could lead to erroneous conclusions. The reliability may reflect a level of consistency in the generated synthetic sensor data. In other words, the reliability can mean that the generated data consistently exhibits the same characteristics and behavior under similar conditions, ensuring reproducibility and predictability in its use for testing or analysis. The accuracy may refer to how well the synthetic sensor data matches a scenario which is supposed to depict. In other words, how close it is to the desired or requested scenario.

Recent examples of techniques for perturbing data are the use of Neural Radiance Fields (NeRFs) to shift the perspective of images or even move, add or remove objects in a scene, and generative models to change the texture and look of certain objects or portions of the scene. Generative models can refer to Generative Adversarial Networks (GANs), Denoising Diffusion Probabilistic Models (DDPMs), Normalizing Flows, and such. Perturbations or transformations using such methods can render an alternative scenario or scene from an input of original raw data. As realized by the disclosed technology, this alternative scenario can be made to look realistic, assuming reasonable amplitudes on the transformations carried out, and can thus provide means to render synthetic data based off a sample of raw data. The disclosed technology use this to couple such a transformation system with a query system for new scenarios to achieve a system that can render queried scenarios beyond the collected raw data to a desired level of dependability. To do this, the disclosed technology leverages a scenario space (also referred to as multi-dimensional space). The dependability may further be indicative of a fidelity of the generated synthetic sensor data. More specifically, it may be desirable to have a representative fidelity c.f. real sensor data.

### Definitions

Throughout the present disclosure, reference is made to different machine learning techniques, generally referred to as machine learning models (or just "models" for short). By this, it is herein meant any form of machine learning algorithm, such as deep learning models, neural networks, or the like, which is able to learn and adapt from input data and subsequently make predictions, decisions, classifications or any other relevant task based on new data.

Deployment of a machine learning model typically involves a training phase where the model learns from labeled or unlabeled training data to achieve accurate predictions during the subsequent inference phase. The training data (and input data during inference) may e.g. be an image, or sequence of images, LIDAR data (i.e. a point cloud), radar data, or any other form of data. Furthermore, the training/input data may comprise a combination or fusion of one or more different data types. Additionally, or in combination, it may comprise a combination or fusion of two or more instances of the same data types, such as two or more images from different cameras.

The machine learning model may be implemented in some embodiments using publicly available suitable software development machine learning code elements, for example, such as those which are available in PyTorch, TensorFlow, and Keras, or in any other suitable software development platform, in any manner known to be suitable to someone of ordinary skill in the art.

An example of such machine learning technique referred to below, is so-called Neural Radiance Fields (NeRFs). NeRFs is one example of a way of offering a representation of a scenario that is learnable (through backpropagation), and be used with a rendering process. The NeRF is thus an example of a learned rendering-based scenario representation. As the name suggest, NeRF utilizes radiance fields, and is thus a radiance based technique. Moreover, the NeRF is neural based in the sense that it is constructed (at least partly) by neural networks. NeRFs can e.g. enable rendering of novel view-points in a recorded scenario, or changing presence or positions of objects in the scenario.

In more detail, a NeRF is a neural network that can reconstruct three-dimensional scenes from a partial set of two-dimensional images (or other sensor data types). The NeRF can learn the scene geometry, objects, and angles of a particular scene. This can be learned e.g. from how light traverses the scene. Then it can be used in rendering of photorealistic 3D (or 2D) views from different viewpoints, as well as of different sensor data types. The views can be rendered as 2D or 3D views. The views can further be generated with one dimension for time, to generate dynamic scenarios. The views can thus be rendered as 4D views as well. A NeRF is typically constructed of a so-called multilayer perceptron (MLP), which is a fully connected neural network architecture. The network can be trained to map spatial coordinates and viewing directions (e.g. light rays from points in an image) to color and density values. An MLP uses a series of mathematical structures that organize inputs, such as a position in 3D space or a 2D viewing direction, to determine the color and density values at each point in a 3D image.

A NeRF needs to be trained (i.e. learned) for each unique scene, using sensor data (e.g. images) from different viewpoints. Also, the sensor position and orientation need to be known, which requires tracking of the sensors. This can e.g. be done through some combination of SLAM, GPS, or inertial measurements. Or it can be done after capture from analyzing of the sensor data, e.g. with the help of a neural network.

The training process of the NeRF can generally be described as follows, in which cameras are used as way of example. For each sparse camera (and image) viewpoint provided, camera rays are traced through the scene, generating a set of 3D points with a given radiance direction (into the camera). For these points, volume density and emitted radiance are predicted using the MLP. The color along a ray can be weighted together, given the density, to give information about occlusions (i.e. object blocking the light). A rendered image can then be generated through classical volume rendering. The error between the rendered image and the original image can be minimized (e.g. through gradient decent) over multiple viewpoints, encouraging the MLP to develop a coherent model of the scene.

Another example of a learned rendering-based approach for representing a scenario is Gaussian Splatting. Like NeRFs, Gaussian splatting is also a radiance-based technique, including rasterization. More specifically, Gaussian Splatting is a volume rendering technique that deals with the direct rendering of volume data without converting the data into surface or line primitives. This technique integrates sparse points produced during camera calibration, and represents scenarios with 2D or 3D Gaussians which retain properties of continuous volumetric radiance fields. The sparse points (or point cloud) can e.g. be randomly initialized and/or obtained from a LiDAR point cloud. The Gaussians may have time-varying positions, and can thus be used to render dynamic 4D scenarios (i.e. including a time dimension).

In such case, the scenario representation may comprise a set of Gaussians. The set of learnable parameters may then correspond to position, size, rotation, and spherical harmonics of the Gaussians. The rendering can be done by projecting the 3D (or dynamic 4D) Gaussians onto an image plane. Then, for each pixel, the algorithm traverses the splatted Gaussians based on their distance to the current camera position, and accumulates their density and color.

As an alternative to rendering-based techniques, also generative models can be used for transforming sensor data. Examples of such machine learning techniques comprises Generative Adversarial Networks (GANs) and Diffusion models.

GANs are a type of machine learning framework consisting of two neural networks, a generator and a discriminator, that compete against each other in a zero-sum game. The generator creates data (e.g., images, audio, or text) resembling real-world samples, and the discriminator evaluates whether a given input is real (from the dataset) or fake (produced by the generator). Through this adversarial process, the generator can improve its ability to create realistic outputs, while the discriminator can improve its ability to distinguish between real and fake data. This dynamic leads to the generation of highly realistic synthetic data.

Diffusion models are a class of generative machine learning models used to create synthetic data, including sensor data. They work by progressively transforming random noise into structured data through an iterative process. During a training phase, the model learns to reverse a process that incrementally adds noise to real data, effectively destroying its structure. In a generation phase, the model applies the learned reverse process to generate new data that resembles the original training data from random noise.

Diffusion models are particularly well-suited for generating synthetic sensor data because they can capture fine-grained details and complex patterns, making them useful for creating realistic representations of inputs like images, point clouds, or time-series data.

The techniques described above can all be used as part of the transformation system referred to above. This can be used together with a query system, which can be based upon the use of so-called embedding networks (may also be referred to as "encoding network", "embedding neural network", or "embedding artificial neural network").

The embedding network refers to a computational model or set of techniques that are used to enable a computer to generate an embedding for input data (e.g. sensor data, textual data, etc.), where the "embedding" is a mathematical (vector) representation of said input data. In more detail, the embedding network can be used to transform the input data into a more compact representation, in a multi-dimensional space, while preserving meaningful relationships between the input data points.

Embedding networks are for example used for tasks like natural language processing (NLP) and computer vision. These networks take raw input data, such as words in a sentence or pixels in an image, and convert them into fixed-size, numerical vectors (embeddings) that capture essential characteristics or features of the input data. In more detail, in NLP, the embedding networks convert words into numerical vectors, where words with similar meanings or contextual usage are represented closer to each other in the embedding space. Similarly, in computer vision, the embedding networks convert images to numerical vectors, enabling the network to understand visual similarities, like grouping similar objects or scenes closer together in the embedding space (multi-dimensional (vector) space).

The embedding network itself may comprise layers of neural network architecture, often employing techniques like convolutional layers, recurrent layers, fully connected layers, attention layers, or transformer layers to learn and extract meaningful patterns from the input data. The embedding network may be trained through processes like supervised learning, unsupervised learning, or self-supervised learning to optimize the embeddings for specific downstream tasks, such as classification, clustering, or recommendation.

Different data types may be embedded using different embedding networks. The different embedding networks may then be trained to generate embeddings in the same embedding space (the same multi-dimensional space) so that embeddings (generated by different embedding networks) that are contextually, spatially and/or temporally related point towards the same point within the multi-dimensional space. The term "point towards the same point within the multi-dimensional space" should in the present context be interpreted broadly, and encompass "point in substantially the same direction within the multi-dimensional space" or "point towards substantially the same point within the multi-dimensional space" and so forth. In more detail, having two embedding vectors pointing towards the same point or in the same direction, one can infer a relationship between the two underlying data samples. For example, if one has two embedding vectors, one can calculate how close they are to pointing towards the same point or how close they are to pointing in the same direction in order to determine a relationship between the underlying data samples, where the closer they are to pointing towards the same point or the same direction, the more likely it is that the underlying data samples relate to the same object or scene.

This may for example be done by training a first embedding network, to generate embeddings in a multi-dimensional space, based on input data from a first data source. Then, each of the other embedding networks can be trained "against" or in association with the first embedding network (or any of the other embedding networks one trained) so that the embeddings of the other networks that are contextually, spatially and/or temporally related with the embeddings of the first embedding network point towards the same point within the multi-dimensional space as the related embeddings of the first embedding network. For example, if the first embedding network is trained to generate image embeddings for camera images and a second embedding network is intended to generate embeddings for LiDAR data, then the second embedding network may be trained by feeding the second embedding network with lidar data of a scene where corresponding image embeddings (of that scene) will be used as basis for forming a ground-truth (desired output). By doing this process for each subsequent embedding network, one may obtain a set of embedding networks capable of ingesting outputs from various data sources and output corresponding embeddings where contextual, spatial and/or temporal relations are represented by the proximity or similarly in direction of the embeddings (vectors) in the multi-dimensional space.

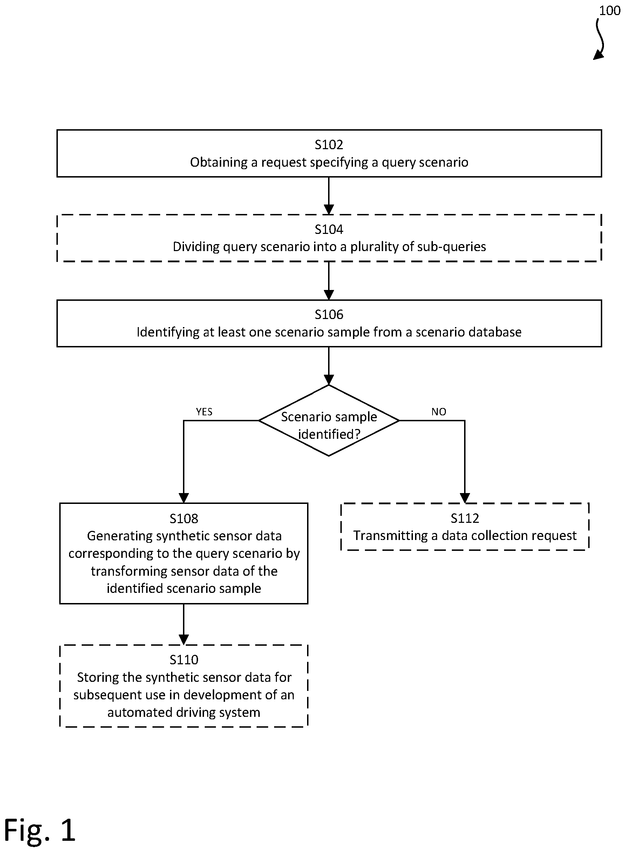

Below, reference is made to scenario embedding networks and query embedding network. These are both referring to embedding networks, as generally described above. The different names are merely to be understood as indicating the different functions of the embedding networks. The scenario embedding network(s) is configured to generate scenario embeddings for scenario samples, based on sensor data recorded in vehicles. The query embedding network is then configured to generate query embeddings for query scenarios. This will be further elaborated upon in connection with Fig. 1 below.

It is to be noted that the disclosed technology is not limited to the above examples of machine learning techniques. For example, other machine learning techniques that employs some of the above aspects may be used, as well as completely different techniques, as realized by the skilled person.

The surrounding environment of the vehicle can be understood as a general area around the vehicle in which objects (such as traffic signs, or other vehicles, landmarks, obstacles, etc.) can be detected and identified by vehicle sensors (radar, LIDAR, cameras, etc.), i.e. within a sensor range of the ego-vehicle. The sensor data may thus depict the world around the vehicle. Put differently, the surrounding environment can refer to the world around the vehicle that is relevant for its decision and control.

By the wording "synthetic", as in synthetic sensor data, is herein meant synthetic in the sense that it is machine (or computer) generated, as opposed to being recorded or otherwise collected data of the real world. It is however to be appreciated that the synthetic sensor data may be generated from "real" sensor data, e.g. by performing transformations of the real sensor data, as described in the following. In the present context, the synthetic sensor data can be seen as transformed sensor data. I.e. the original sensor data after some transformation has been made to it.

### Embodiments

Figure 1 is a schematic flowchart representation of a computer-implemented method 100 for synthetic sensor data generation. More specifically, the method 100 may be a method for generating synthetic sensor data of a requested driving scenario (or query scenario). The generated synthetic sensor data can be used for scenario-based testing for ADSs. The method 100 can be performed by a general computing device, such as a server (may also be referred to as remote server, cloud server, central server, back-office server, fleet server, or back-end server). More specifically, the method 100 may be performed by a processing system of the server. The processing system may for example comprise one or more processors and one or more memories coupled to the one or more processors, wherein the one or more memories store one or more programs that perform the steps, services and functions of the method 100 disclosed herein when executed by the one or more processors.

Below, the different steps of the method 100 are described in more detail. Even though illustrated in a specific order, the steps of the method 100 may be performed in any suitable order as well as multiple times. Thus, although Fig. 1 may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 100 will become apparent from the present disclosure. The herein mentioned and described embodiments are only given as examples and should not be limiting to the present invention. Other solutions, uses, objectives, and functions within the scope of the invention as claimed below described patent claims should be apparent for the person skilled in the art. It should further be appreciated that the method 100 of Fig. 1 comprises some steps which are illustrated as boxes in solid lines and some steps which are illustrated in dashed lines. The steps which are shown in solid lines are steps which are comprised in the broadest example embodiment of the method 100. The steps which are comprised in dashed lines are examples of a number of optional steps which may form part of a number of alternative embodiments. It should be appreciated that the optional steps need not be performed in order. Furthermore, it should be appreciated that not all of the steps need to be performed. The example steps may be performed in any order and in any combination. For example, the method 100 may optionally comprise the step denoted S104. Alternatively, or in combination with step S104, the method may optionally comprise the step denoted S110. Alternatively, or in combination with step S104 and/or step S110, the method 100 may optionally comprise the step denoted S112.

The method 100 uses a scenario database. The scenario database can be seen as a collection of existing scenario samples. More specifically, the scenario database comprises a plurality of scenario samples. Each scenario sample comprising sensor data depicting a surrounding environment of a vehicle over a period of time. In other words, a scenario sample of the scenario database may comprise a sequence of sensor data. The sensor data of each scenario sample may thus be a plurality of sensor recordings (such as image frames making up a video sequence) over the period of time. The period of time may extend over at least two subsequent points-in-time. The sensor data depicting the scenario may for instance comprise two or more sensor data frames. However, the period of time may also be a single point-in-time. Thus, the sensor data associated with a scenario sample may comprise of sensor data frames for said point-in-time. It is to be noted that the sensor data associated with a scenario sample may comprise sensor data of one or more sensor data modalities. In other words, the sensor data may comprise one or more sensor data types, such as image data, LiDAR data, radar data, ultrasonic data, etc. Moreover, the sensor data may comprise sensor data captured by two or more instances of the same sensor data type, such as image data from two or more cameras.

It is to be noted that even though reference is made to "a" or "the" vehicle in connection with the scenario samples of the scenario database, the scenario samples may of course be captured by/for a number of different vehicles. The vehicle referred to in connection with a certain scenario sample thus refer to whichever vehicle has captured the corresponding sensor data, or that is otherwise linked to (e.g. depicted in) said sensor data. The sensor data may thus be captured by on-board sensors of said vehicle. Alternatively, the sensor data may be captured by off-board sensors, such as sensors of roadside infrastructure, or of other road users (such as other vehicles), that are in view of the surrounding environment of said vehicle.

The wording scenario (or driving scenario) may be understood as a certain situation, or a chain of events. The scenario may also be referred to as a scene, evolving over the period of time. Driving scenarios can range from common situations (such as following a car on a highway) to more rare edge cases (such as avoiding an obstacle while merging onto a busy road). An aim in ADS development is to ensure the ADS can handle both typical and exceptional conditions effectively.

Moreover, the scenario may be defined by a set of conditions of circumstances under which the vehicle operates during said period of time. This may encompass various factors relating to the environment, or that can affect the driving experience, the vehicle's performance, and how it operates. The driving scenario may e.g. comprise one or more of a specific route, geographical location, type of driving environment (e.g. school area, urban environment, highway segments, etc.), type of road (e.g. highways, city streets, rural roads, intersections, and roundabouts), presence and type of other road users, time of day (e.g., morning, midday, evening, nighttime, etc.), traffic levels (e.g. rush hour, low traffic density, etc.), weather conditions, road conditions, lighting levels, traffic conditions (e.g. speed, distance to other road users) etc. It is to be understood that the driving scenario may be defined by any combination of the above-mentioned examples. As a non-limiting example, the scenario may be defined as "driving on city streets, in heavy rain, with pedestrians crossing the road, and light traffic".

The wording "sample", as in "scenario sample", may then be seen as an instance of a scenario within the scenario database. More specifically, the scenario sample can be seen as an existing scenario, already recorded and present in the scenario database. Each scenario sample may be associated with a set of data, such as sensor data collected by sensors onboard the vehicle, as well as other data added to the sample, which will be further explained below.

The wording query scenario may in turn refer to a requested or desired scenario. The query scenario may be a scenario that is not currently existing in the scenario database, but which is desirable to obtain. The query scenario may be represented by a text description describing the query scenario. For example, a sentence such as "driving on city streets, in heavy rain, with pedestrians crossing the road, and light traffic". Alternatively, or in combination the query scenario may be represented by a computer-simulated scenario. For example, the computer simulated scenario may be generated by computer graphics. It may then be desirable to obtain more realistic sensor data of said simulated scenario, which can be achieved by the synthetic sensor data generated by the proposed method 100. More specifically, the computer simulated scenario can be represented by a scenario embedding, just like "real" sensor data. The method 100 then provides means for generating synthetic sensor data corresponding to said scenario embedding.

Each scenario sample is associated with a scenario embedding representing the scenario sample in a multi-dimensional space. A scenario embedding associated with a scenario sample may be generated by processing sensor data of said scenario sample through a scenario embedding network that has been trained to process data from input sensor data and to output a corresponding scenario embedding in the multi-dimensional space.

The multi-dimensional space (may also be referred to as scenario space or embedding space) herein refers to a mathematical space where high-dimensional data (such as sensor data) can be transformed and represented as lower-dimensional vector representations, known as embeddings. The multi-dimensional space can be structured such that the embeddings capture meaningful patterns, relationships or features from the original data, enabling efficient processing, comparison and analysis.

More specifically, in the embedding space, similar sensor data (e.g., frames of similar driving scenarios) can be mapped to points that are close together, while dissimilar data is mapped to points farther apart. This facilitates tasks such as classification, clustering, retrieval, and anomaly detection in automated driving systems. For example, the embedding space can be used to group sensor data from similar driving scenarios (e.g. by clustering) or to identify rare or challenging events for training and testing purposes (e.g. though matching algorithms).

The embedding space can further enable mapping between different data modalities. More specifically, the multi-dimensional space may be a common space for two or more data modalities. For example, different types of sensor data (e.g. image data, Lidar data, radar data, etc.), as well as textual data (e.g. a description of a scenario) can be mapped to the same embedding space. Thereby, a query embedding generated e.g. for textual data, can be used to identify e.g. image data through comparison with an embedding associated with the image data. In some examples, the multi-dimensional space is a common space for image data and textual data.

Within the present context, the multi-dimensional space relates to a space spanning different possible driving scenarios, i.e. a "scenario space". Analysis of the scenario space can therefore provide information about what scenarios are covered (or not covered) by the existing scenario samples of the scenario database. Moreover, the scenario space can enable identification of specific scenarios, such as scenarios corresponding to a certain query scenario, thus aiding in retrieval of relevant data in the scenario database.

The construction of embeddings (or vector representations or encodings) of data typically involves machine learning models, such as neural networks, trained to learn representations that preserve the underlying semantics of the input data. Such networks may be referred to as embedding networks, as explained in the foregoing. The scenario embedding of the scenario database may thus be generated by processing each scenario (or the corresponding sensor data) through one or more scenario embedding networks. Different scenario embedding network may be used for different types of sensor data. Moreover, the sensor data of a scenario sample may comprise more than one sensor data type, such as two or more of image data, LiDAR data, radar data, etc. More generally, the sensor data of a scenario sample may comprise sensor data of a first sensor type and sensor data of a second sensor type. Each scenario embedding may be formed by aggregating a first sensor embedding generated for the sensor data of the first sensor type and a second sensor embedding generated for the sensor data of the second sensor type. In other words, separate embeddings may be generated for the different sensor data types. The scenario embedding may then be formed by aggregating (or in any other way combining) the embeddings of the different sensor data types. It is however to be noted that a single embedding network can be trained to directly generate scenario embedding for two or more sensor data types (i.e. for two or more sensor modalities)

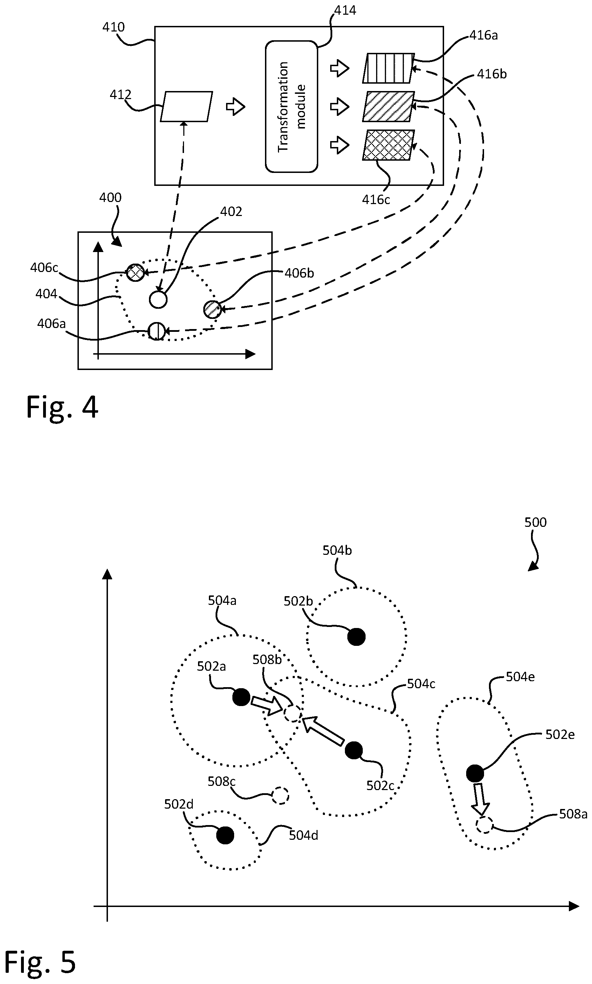

Each scenario embedding (or rather each scenario sample) is further associated with a transformation volume in the multi-dimensional space. The transformation volume is indicative of a set of possible transformed scenarios that can be generated from the corresponding scenario sample. The transformation volume of a specific scenario sample can thus be seen as a sub-space within the multi-dimensional space which covers a set of reachable transformations from said scenario sample. Put differently, the transformation volume spans a set of scenario embeddings which are associated with synthetic sensor data that can be generated from the scenario sample. The transformation volume may further be seen as a finite volume within the multi-dimensional space, or a limit of transformation within the multi-dimensional space. What limits the transformation volume is to what extent the original sensor data can be modified while maintaining a level of realism (e.g. fulfilling some reliability threshold). Moving too far away from the original sensor data, can otherwise introduce artifacts, biases or other errors, which diminishes the utility for ADS development. The transformation volume may thus further indicate the set of possible transformed scenarios that can be generated from the scenario sample while satisfying a validity threshold, a reliability threshold and/or an accuracy threshold. As explained in the foregoing, the validity threshold may refer to what extent the synthetic sensor data reflects the characteristics of real-world sensor data. In other words, it may be a measure of how trustworthy the synthetic sensor data is for its intended purpose without introducing artifacts or inconsistencies that could lead to erroneous conclusions. The reliability threshold may be a metric for how consistently the synthetic sensor data can be generated. The accuracy threshold may be a metric of how well the synthetic sensor data matches the query scenario. In some embodiments, a dependability threshold may be used. The dependability threshold may capture two or more aspects of the validity threshold, the reliability threshold and the accuracy threshold. In other words, the dependability threshold may be a metric of the how realistic the synthetic sensor data appears, or how well it represents real-world sensor data. The transformation volume will be further explained below, in connection with Fig. 4 and Fig. 5.

It is to be noted that the scenario database can be structured in different ways depending on a specific realization. For example, the scenario database may be represented by single database comprising all of the data of the scenario database described herein. In another example, the data may be distributed over several databases, that are linked together to form the scenario database. As an example, the sensor data associated with each scenario sample may be stored in a first database. The associated scenario embeddings, together with the associated transformation volumes may be stored in a second database. The first and second database may then be linked through a scenario sample identifier. It is further to be noted that the scenario database may comprise additional data. For example, each scenario sample may have an associated learned rendering-based scenario representation or other means for transforming the sensor data, as will be further explained below.

The method 100 comprises obtaining S102 a request specifying a query scenario, wherein the query scenario is associated with a query embedding representing the query scenario in the multi-dimensional space. The query embedding may be received as part of the obtained request. Alternatively, the method 100 determining the query embedding, based on the obtained query scenario.

The query embedding may be generated by processing the query scenario through a query embedding network. The query embedding network having been trained to process data from input query scenarios and to output a corresponding query embedding in the multi-dimensional space. The query scenario may e.g. be represented by a text description of the query scenario, or a computer-simulated scenario. As explained in the foregoing, the query embedding network and the scenario embedding network may be trained in association with each other, such that a query embedding generated by the query embedding network and a scenario embedding generated by the scenario embedding network point towards the same point within the multi-dimensional space when the query embedding and the scenario embedding are contextually, spatially and/or temporally related. In other words, they can be trained so as to relate to the same multi-dimensional space.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc.

In this specific case, obtaining S102 the request may comprise receiving the request, e.g. from a developer. In another example, the requested query scenario may be determined or identified as part of the method 100, based on the existing scenario samples of the scenario database. For example, the query scenario may be determined by the computing device (e.g. the server) performing the method 100, by identifying "holes" or "empty spaces" within the multi-dimensional space, which are not covered by the existing scenario samples, or their transformation volumes.

The method 100 further comprises identifying S106, within the scenario database, at least one scenario sample having a transformation volume within which the query embedding is located. This may be done by comparing a position of the query embedding in the multi-dimensional space with the respective transformation volumes associated with the scenario samples of the scenario database. Put differently, the method 100 may comprise finding (or searching for) one or more existing scenario samples that can be transformed into the scenario embedding, based on their associated transformation volumes. In other words, one or more scenario samples which have associated transformation volumes covering the query embedding can be identified, as part of step S106. How identifying S106 the at least one scenario sample can be performed, will be further elaborated upon in connection with Fig. 5 below.

The identified scenario sample may be further identified based on a distance between the associated scenario embedding and the query embedding in the multi-dimensional space. In one example, the scenario sample may be identified as the closest/most similar scenario sample in the scenario database, based on a matching score between scenario embedding and the query embedding. The matching score may e.g. be determined based on a Euclidian distance, or a cosine similarity.

In another example, the identified scenario sample may be further identified based on a likelihood estimate of the scenario sample being (dependably) transformable into the query scenario. This may be advantageous in a case where the closest (in distance) scenario sample is not necessarily the best scenario sample for being transformed into the query scenario. It may for instance be possible that a scenario sample further away (but still having a transformation volume covering the query embedding) may be better suited. In such an implementation, the transformation volumes may further be associated with a probability distribution of how likely it is that the associated scenario sample can be transformed into a certain point in the multi-dimensional space. Two scenario samples may for instance have transformation volumes covering the query embedding. However, in the point corresponding to the query embedding, one of the scenario samples may have a higher probability of being (dependably) transformed into the query embedding, compared to the other one. In other words, the scenario sample may be identified S106 as the scenario sample having the highest probability of being transformed into synthetic sensor data having an associated scenario embedding corresponding to the query embedding.

The method 100 further comprises, in response to successfully identifying the at least one scenario sample, generating S108 synthetic sensor data corresponding to the query scenario by transforming the sensor data of the at least one identified scenario sample to synthetic sensor data having an associated scenario embedding in the multi-dimensional space within a threshold distance from the query embedding. Put differently, the synthetic sensor data is generated by transforming the at least one existing scenario sample, such that a scenario embedding generated for the synthetic sensor data is within the threshold distance from the query embedding. The threshold distance may provide for an error margin, assuring that the synthetic sensor data is "sufficiently" similar to the query scenario. In other words, the synthetic sensor data may be generated so at to correspond to the query scenario, based on a similarity to the query embedding within the multi-dimensional space. The threshold distance may be compared to a Euclidian distance between the query embedding and the scenario embedding of the synthetic sensor data. In another example, the threshold distance may be compared to a cosine similarity between the query embedding and the scenario embedding of the synthetic sensor data. It is however to be noted, that other similarity metrics may be used as well.

Moreover, the synthetic sensor data may be generated such that the associated scenario embedding is within the transformation volume of the at least one scenario sample. This may ensure that the synthetic sensor data fulfills any requirement of realism.

The synthetic sensor data may comprise one or more sensor data frames. For example, the synthetic sensor data may comprise a number of subsequent sensor data frames (such as image frames, LiDAR point clouds, radar data etc.). The synthetic sensor data may thus in some cases be a video stream over two or more time instances. In another example, the synthetic sensor data may be a sensor data frame of a single point-in-time. Moreover, the synthetic sensor data may comprise sensor data of one or more sensor modalities (i.e. of one or more sensor data types).

In the following, aspects related to the transformation of the sensor data, for generating synthetic sensor data, will be explained.

Transforming the sensor data of the at least one identified scenario sample to synthetic sensor data may be performed by (i) applying transformation to the sensor data, thereby generating updated sensor data; (ii) determining a location of an embedding representing the updated sensor data within the multi-dimensional space; repeating steps (i) and (ii) until the position of the updated sensor data is within the threshold distance of the query embedding, and providing the updated sensor data as the synthetic sensor data. In other words, the synthetic sensor data may be generated through an iterative process of transforming the (original) sensor data until it corresponds (at least within the threshold distance) to the query embedding. The transformations may include changing of view-points, adding/removal of objects in the depicted surrounding environment, changing of object properties (e.g. modifying colors, textures, or materials) changing of weather, changing of lighting conditions, changing of road layout, changing of object trajectories, changing of sensor characteristics, changing of available sensors, traversals of previously unseen areas, etc.

The above described iterative transformation process may be combined with different machine learning techniques.

In some examples, generative machine learning techniques may be used. For example, transforming the sensor data of the at least one identified scenario sample to synthetic sensor data may comprise feeding the sensor data to a Generative Adversarial Network or a Diffusion model, trained to output synthetic sensor data. The GAN and/or Diffusion model may further be trained to take the query embedding as input. In another example, the GAN and/or Diffusion model may be trained to take the query scenario as input. The outputted synthetic sensor data may be seen as transformed sensor data.

Alternatively, or in combination, rendering based techniques may be used. For example, each scenario sample in the database may be further associated with a learned rendering-based scenario representation configured for subsequent rendering of synthetic sensor data associated with said scenario sample. The scenario representation may thus be learned from the sensor data of the scenario sample. Transforming the sensor data of the at least one identified scenario sample to synthetic sensor data may comprise rendering the synthetic sensor data using the learned rendering-based scenario representation. The process of rendering the synthetic sensor data may thus be rendering a transformed scenario, different from the scenario from which the scene representation was learned. This can e.g. be done by modifying parameters of the scene representation.

The scenario representation may be understood as a set of learnable parameters which together describes different physical properties of the scene, such as the geometry, objects, colours, lighting, etc. Put differently, the scenario representation can be physically based in such way that it understands and models the underlying physical processes that occurs in the real-world, and how the sensors reflect these in the sensor data (considering e.g. projections, refractions, lenses etc.). This can e.g. be based on characteristics of materials, and modelling how light travels in the environment. Thereby, the scenario representation can learn to model geometric aspects, such as positioning, orientation, and scale of 3D models. It can further model lighting aspects, such as colours, shadows, brightness, and reflections. It can further model transparency and translucency, describing how light passes through different materials like glass or fog. The learned rendering-based scenario representation may be a Neural Radiance Field. In another example, the learned rendering-based scenario representation may be a Gaussian splatting-based model.

It is further to be noted that combination of the above described techniques is possible as well. As an example, a learned rendering-based scenario representation, such as NeRF, can be trained. Then a diffusion model can be used to perform direct edits on the NeRF representation.

In some embodiments, the method 100 further comprises dividing S104 the query scenario into a plurality of sub-queries, each sub-query being associated with a respective sub-query embedding. The step of identifying S106 may comprise identifying, for each sub-query, a scenario sample having a transformation volume within which the associated sub-query embedding is located. The synthetic sensor data may be generated S108 by transforming a combination of the sensor data of each identified scenario sample. Put differently, the query scenario can be constructed using a plurality of scenario samples of the scenario database. In a non-limiting example, the query scenario is "a blue bus doing a cut-in in a roundabout". First, a scenario sample depicting a roundabout can be identified. Then, another scenario sample of a blue bus can be identified. Then, a model of a cut-in trajectory can be generated. Then, the different scenario samples can be combined in the generating step, to form synthetic sensor data depicting the query scenario. Optionally, a diffusion model may be used to change a color/lighting/shadow of the blue bus to better fit with the roundabout. Even further, the diffusion model could be used to change the roundabout from summertime to winter time.

The method 100 may further comprise storing S110 the synthetic sensor data for subsequent use in development of an automated driving system. The synthetic sensor data may be stored S110 in the scenario database. The method 100 may further comprise applying a feature under test of the ADS, to the synthetic sensor data.

The method 100 may further comprise, in response to unsuccessfully identifying the scenario sample, transmitting S112 a data collection request to one or more vehicles of a fleet of vehicles. In other words, if no existing scenario sample of the scenario database can be validly, reliably and/or accurately transformed into the query scenario, a data collection request can instead be transmitted S112. The data collection request may be indicative of the query scenario. For example, the data collection request may comprise the query embedding. If a vehicle of the fleet of vehicles experiences (and records sensor data of) a scenario matching the query scenario, the vehicle may transmit the associated sensor data to the computing device, or whatever device performs the method 100. Depending on how far away the query embedding is from any existing scenario embedding (or their associated transformation volume), the data collection request may be generated differently. For example, if the query scenario is of high priority (e.g. based on it being relatively far away from existing scenario samples) a request for raw sensor data of a recorded scenario can be transmitted. In another example, it the query scenario is of lower priority (e.g. based on it being relatively close to existing scenarios), a request for encoded (or compressed sensor data, or for a scenario that can be transformed into the query scenario, can be transmitted.

Executable instructions for performing these functions are, optionally, included in a non-transitory computer-readable storage medium or other computer program product configured for execution by one or more processors.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

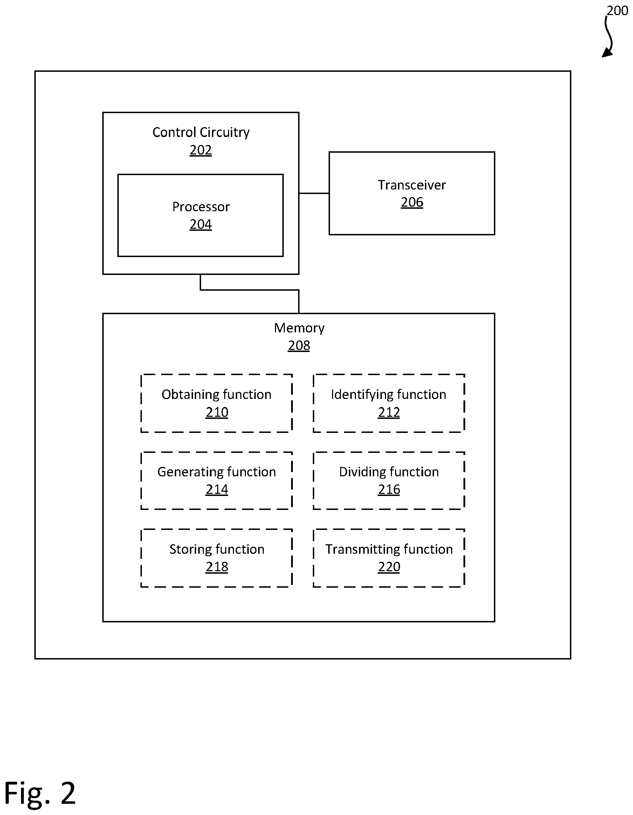

Figure 2 is a schematic illustration of a computing device 200, in accordance with some embodiments of the disclosed technology. The computing device 200 may be configured to perform the method 100 as described in connection with Fig. 1. Thus, the computing device 200 is configured to perform synthetic sensor data generation using a scenario database as described in the foregoing.

The computing device 200 as described herein, refers to a computer system, or any device or general computing system configured to perform various functions. The computing device 200 may for instance refer to a server or the like. Even though the computing device 200 is herein illustrated as one device, the computing device 200 may be a distributed computing system, formed by a number of different devices.

The computing device 200 comprises control circuitry 202. The control circuitry 202 may physically comprise one single circuitry device. Alternatively, the control circuitry 202 may be distributed over several circuitry devices.

As shown in the example of Fig. 2, the computing device 200 may further comprise a transceiver 206 and a memory 208. The control circuitry 202 being communicatively connected to the transceiver 206 and the memory 208. The control circuitry 202 may comprise a data bus, and the control circuitry 202 may communicate with the transceiver 206 and/or the memory 208 via the data bus.

The control circuitry 202 may be configured to carry out overall control of functions and operations of the computing device 200. The control circuitry 202 may include a processor 204, such as a central processing unit (CPU), microcontroller, or microprocessor. The processor 204 may be configured to execute program code stored in the memory 208, in order to carry out functions and operations of the computing device 200. The control circuitry 202 is configured to perform the steps of the method 100 as described above in connection with Fig. 1. The steps may be implemented in one or more functions stored in the memory 208.

The transceiver 206 is configured to enable the computing device 200 to communicate with other entities, such as other devices. The transceiver 206 may both transmit data from and receive data to the computing device 200. The computing device 200 may e.g. be part of a vehicle. The transceiver 206 may then enable the computing device 200 to communicate with other systems of the vehicle, or with external entities, such as other vehicles, or a remote server.

The memory 208 may be a non-transitory computer-readable storage medium. The memory 208 may be one or more of a buffer, a flash memory, a hard drive, a removable media, a volatile memory, a non-volatile memory, a random access memory (RAM), or another suitable device. In a typical arrangement, the memory 208 may include a non-volatile memory for long-term data storage and a volatile memory that functions as system memory for the computing device 200. The memory 208 may exchange data with the circuitry 202 over the data bus. Accompanying control lines and an address bus between the memory 208 and the circuitry 202 also may be present. The memory 208 may further store the scenario database, as described above in connection with Fig. 1. Alternatively, the scenario database may be provided externally to the computing device 200. The computing device 200 may then be communicatively connected to the scenario database.

Functions and operations of the computing device 200 may be implemented in the form of executable logic routines (e.g., lines of code, software programs, etc.) that are stored on a non-transitory computer readable recording medium (e.g., the memory 208) of the computing device 200 and are executed by the circuitry 202 (e.g., using the processor 204). Put differently, when it is stated that the circuitry 202 is configured to execute a specific function, the processor 204 of the circuitry 202 may be configured execute program code portions stored on the memory 208, wherein the stored program code portions correspond to the specific function. Furthermore, the functions and operations of the circuitry 202 may be a stand-alone software application or form a part of a software application that carries out additional tasks related to the circuitry 202. The described functions and operations may be considered a method that the corresponding device is configured to carry out, such as the method 100 discussed above in connection with Fig. 1. In addition, while the described functions and operations may be implemented in software, such functionality may as well be carried out via dedicated hardware or firmware, or some combination of one or more of hardware, firmware, and software. In the following, the function and operations of the computing device 200 is described.

The control circuitry 202 is configured to obtain a request specifying a query scenario. The query scenario being associated with a query embedding representing the query scenario in the multi-dimensional space. This may be performed e.g. by execution of an obtaining function 210.

The control circuitry 202 is further configured to identify, within the scenario database, at least one scenario sample having a transformation volume within which the query embedding is located. This may be performed e.g. by execution of an identifying function 212.

The control circuitry 202 is further configured to, in response to successfully identifying the at least one scenario sample, generate synthetic sensor data corresponding to the query scenario by transforming the sensor data of the at least one identified scenario sample to synthetic sensor data having an associated scenario embedding in the multi-dimensional space within a threshold distance from the query embedding. This may be performed e.g. by execution of a generating function 214.

The control circuitry 202 may be further configured to divide the query scenario into a plurality of sub-queries, each sub-query being associated with a respective sub-query embedding. This may be performed e.g. by execution of a dividing function 216. The control circuitry 202 may then be configured to identify, for each sub-query, a scenario sample having a transformation volume within which the associated sub-query embedding is located. The control circuitry 202 may then be configured to generated the synthetic sensor data by transforming a combination of the sensor data of each identified scenario sample.

The control circuitry 202 may be further configured to store the synthetic sensor data for subsequent use in development of an automated driving system. This may be performed e.g. by execution of a storing function 218.

The control circuitry 202 may be further configured to transmit a data collection request to one or more vehicles of a fleet of vehicles, in response to unsuccessfully identifying the scenario sample. This may be performed e.g. by execution of a transmitting function 220.

It should be noted that the principles, features, aspects, and advantages of the method 100 as described above in connection with Fig. 1, are applicable also to the computing device 200 as described herein. In order to avoid undue repetition, reference is made to the above. Hence, the control circuitry may be configured to perform any of the steps as described as part of the method 100.

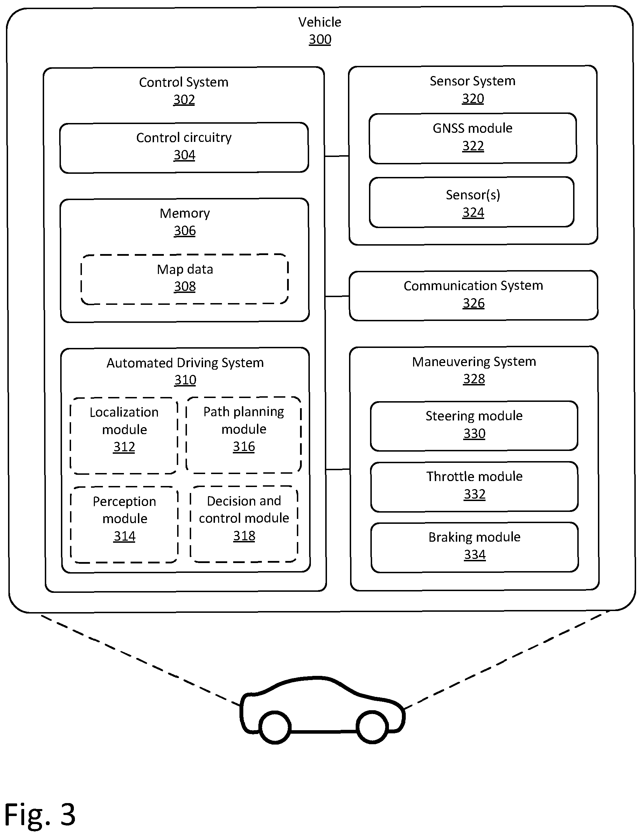

Figure 3 is a schematic illustration of a vehicle 300 in accordance with some embodiments. The vehicle 300 may be equipped with an Automated Driving System (ADS) 310. As used herein, a "vehicle" is any form of motorized transport. For example, the vehicle 300 may be any road vehicle such as a car (as illustrated herein), a motorcycle, a (cargo) truck, a bus, a smart bicycle, etc. The vehicle 300 should within the present context be understood as a vehicle that can be deployed with an ADS, trained using the synthetic sensor data generated by the method 100 described herein. The vehicle 300 may further be a vehicle that can be used for collecting sensor data of different driving scenarios experienced by the vehicle.

In the present context, an Automated Driving System (ADS) refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, radar, lidar, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. ADAS features often serve as building blocks for ADS. Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that distinction between ADAS and AD lies in the level of autonomy and control. ADAS systems are designed to aid and support drivers, while an ADS aims to take full control of the vehicle without requiring constant human oversight. AD accordingly aims for higher levels of autonomy (such as Levels 4 and 5, according to the SAE International standard), where the vehicle can operate independently in most or all driving scenarios without human intervention. As mentioned in the foregoing, the term "ADS" in used herein as an umbrella term encompassing both ADAS and AD. An ADS function or ADS feature may in the present context be understood as a specific function or feature of the entire ADS stack, such as e.g., a Highway Pilot feature, a Traffic-Jam pilot feature, a path planning feature, and so forth.

The vehicle 300 comprises a number of elements which can be commonly found in autonomous or semi-autonomous vehicles. It will be understood that the vehicle 300 can have any combination of the various elements shown in Fig. 3. Moreover, the vehicle 300 may comprise further elements than those shown in Fig. 3. While the various elements are herein shown as located inside the vehicle 300, one or more of the elements can be located externally to the vehicle 300. Further, even though the various elements are herein depicted in a certain arrangement, the various elements may also be implemented in different arrangements, as readily understood by the skilled person. It should be further noted that the various elements may be communicatively connected to each other in any suitable way. The vehicle 300 of Fig. 3 should be seen merely as an illustrative example, as the elements of the vehicle 300 can be realized in several different ways.

The vehicle 300 comprises a control system 302. The control system 302 is configured to carry out overall control of functions and operations of the vehicle 300. The control system 302 comprises control circuitry 304 and a memory 306. The control circuitry 302 may physically comprise one single circuitry device. Alternatively, the control circuitry 302 may be distributed over several circuitry devices. As an example, the control system 302 may share its control circuitry 304 with other parts of the vehicle. The control circuitry 302 may comprise one or more processors, such as a central processing unit (CPU), microcontroller, or microprocessor. The one or more processors may be configured to execute program code stored in the memory 306, in order to carry out functions and operations of the vehicle 300. The processor(s) may be or include any number of hardware components for conducting data or signal processing or for executing computer code stored in the memory 306. In some embodiments, the control circuitry 304, or some functions thereof, may be implemented on one or more so-called system-on-a-chips (SoC). As an example, the ADS 310 may be implemented on a SoC. The memory 306 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 306 may include database components, object code components, script components, or any other type of information structure for supporting the various activities of the present description.

In the illustrated example, the memory 306 further stores map data 308. The map data 308 may for instance be used by the ADS 310 of the vehicle 300 in order to perform autonomous functions of the vehicle 300. The map data 308 may comprise high-definition (HD) map data and/or standard-definition (SD) map data. It is contemplated that the memory 308, even though illustrated as a separate element from the ADS 310, may be provided as an integral element of the ADS 310. In other words, according to some embodiments, any distributed or local memory device may be utilized in the realization of the present inventive concept. Similarly, the control circuitry 304 may be distributed e.g. such that one or more processors of the control circuitry 304 is provided as integral elements of the ADS 310 or any other system of the vehicle 300. In other words, according to an exemplary embodiment, any distributed or local control circuitry device may be utilized in the realization of the disclosed technology.

The vehicle 300 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 300. The sensor system 320 may further comprise one or more sensors 324. The one or more sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 300.

The vehicle 300 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 326 may communicate using one or more communication technologies. The communication system 326 may comprise one or more antennas. Cellular communication technologies may be used for long-range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short-range communication technologies may be used such as Wireless Local Area (LAN), e.g. IEEE 802.11 based solutions, for communicating with other vehicles in the vicinity of the vehicle 300 or with local infrastructure elements. ETSI is working on cellular standards for vehicle communication and for instance 5G is considered as a suitable solution due to the low latency and efficient handling of high bandwidths and communication channels.

The communication system 326 may further provide the possibility to send output (such as sensor data recorded for a driving scenario) to a remote location (e.g. remote server, operator or control center) by means of the one or more antennas. Moreover, the communication system 326 may be further configured to enable the various elements of the vehicle 300 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 300 further comprises a maneuvering system 320. The maneuvering system 328 is configured to control the maneuvering of the vehicle 300. The maneuvering system 328 comprises a steering module 330 configured to control the heading of the vehicle 300. The maneuvering system 328 further comprises a throttle module 332 configured to control actuation of the throttle of the vehicle 300. The maneuvering system 328 further comprises a braking module 334 configured to control actuation of the brakes of the vehicle 300. The various modules of the steering system 328 may receive manual input from a driver of the vehicle 300 (i.e. from a steering wheel, a gas pedal and a brake pedal respectively). However, the maneuvering system 328 may be communicatively connected to the ADS 310 of the vehicle, to receive instructions on how the various modules should act. Thus, the ADS 310 can control the maneuvering of the vehicle 300.

As stated above, the vehicle 300 comprises an ADS 310. The ADS 310 may be part of the control system 302 of the vehicle. The ADS 310 is configured to carry out the functions and operations of the autonomous functions of the vehicle 300. The ADS 310 can comprise a number of modules, where each module is tasked with different functions of the ADS 310.

The ADS 310 may comprise a localization module 312 or localization block/system. The localization module 312 is configured to determine and/or monitor a geographical position and heading of the vehicle 300, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS.

The ADS 310 may further comprise a perception module 314 or perception block/system. The perception module 314 may refer to any commonly known module and/or functionality, e.g. comprised in one or more electronic control modules and/or nodes of the vehicle 300, adapted and/or configured to interpret sensory data - relevant for driving of the vehicle 300 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensor data from the sensor system 320. The localization module 312 and/or the perception module 314 may further transmit control instructions to the sensor system 320.

The ADS may further comprise a path planning module 316. The path planning module 316 is configured to determine a planned path of the vehicle 300 based on a perception and location of the vehicle as determined by the perception module 314 and the localization module 312 respectively. A planned path determined by the path planning module 316 may be sent to the maneuvering system 328 for execution. As an example, the determined current position of the vehicle on the navigation map may be transmitted to the path planning module 316.

The ADS may further comprise a decision and control module 318. The decision and control module 318 is configured to perform the control and make decisions of the ADS 310. For example, the decision and control module 318 may decide on whether the planned path determined by the path-planning module 316 should be executed or not. The decision and control module 318 may be further configured to detect any deviating behavior of the vehicle, such as deviations from the planned path, or expected trajectory of the path planning module 316. This includes both evasive maneuvers performed by the ADS 310 and by a driver of the vehicle.

It should be understood that parts of the described solution may be implemented either in the vehicle 300, in a system located external to the vehicle, or in a combination of internal and external to the vehicle; for instance, in a server in communication with the vehicle, a so-called cloud solution. The different features and principles of the embodiments may be combined in other combinations than those described. Further, the elements of the vehicle 300 (i.e. the systems and modules) may be implemented in different combinations than those described herein.

Figure 4 illustrates, by way of example, a mapping between scenario samples and a multi-dimensional space 400. Fig. 4 is intended for improved understanding of the aspects of the herein disclosed technology, and shall not be seen as limiting of the scope. More specifically, Fig. 4 shows the effect of a transformation of (original) sensor data 412, in the embedding space 400. Specifically, the transformations can be mapped to the embedding space, meaning it can be viewed and analyzed in the embedding space.

In the upper part of Fig. 4, a transformation system 410 is shown. The transformation system 410 comprises a transformation module 414. The transformation module 414 herein represents a block for performing the techniques relating to the transformation of (original) sensor data 412 to generate synthetic sensor data 416a, 416b, 416c. The transformation module 414 may thus implement technologies described above, such as the generative or rendering-based machine learning techniques.

In the lower part of Fig. 4, an illustration of a multi-dimensional space 400 is shown. For practical reasons, the multi-dimensional space 400 is herein illustrated as a two-dimensional space, spanned by two axes. It is however to be noted that the multi-dimensional space 400 may be of any dimension. More specifically, the multi-dimensional space 400 may be formed by two or more dimensions.

Moreover, as shown herein, the transformation volume 404 may be a closed set. In other words, the transformation volume 404 may be formed by a single closed volume in the multi-dimensional space. It should however be noted that even though the transformation volume 404 is herein depicted as a closed set, it may also be formed by a number of separate sub-sets. Put differently, the transformation volume 404 associated with a scenario sample may be formed by a number of sub-volumes, separated in the multi-dimensional space. In other words, the transformation volume may be a disjoint volume. This may be the case e.g. if (at least some of) the possible transformations occur in discrete steps, rather than continuous.

As explained in the foregoing, a scenario sample (or the sensor data thereof) can be encoded into a scenario embedding within the multi-dimensional space 400. In Fig. 4, a dashed double-headed arrow indicates how the sensor data 412 can be mapped to an associated scenario embedding 402 in the multi-dimensional space 400.

As the sensor data 412 is transformed into synthetic sensor data, herein represented by three differently transformed scenarios indicated by 416a-c, a scenario embedding associated with each transformed data shift to another point in the multi-dimensional space 400. More specifically, the first synthetic sensor data 416a maps to a first shifted scenario embedding 406a in the multi-dimensional space. Similarly, the second synthetic sensor data 416b maps to a second shifted scenario embedding 406b. Lastly, the third synthetic sensor data 416c maps to a third shifted scenario embedding 406c.

Applying multiple such transformation (still with reasonable "amplitude" of these transformations to keep the results valid/reliable/accurate, as explained in the following) renders a transformation volume in the multi-dimensional space. The transformation volume 404 can be seen as a sub-space, within the multi-dimensional space, which is spanned by the scenario embeddings that can be reached through transformation of the scenario sample formed by the sensor data 412 and the associated scenario embedding 402.

The transformation volume 404 (may also be referred to as perturbation space) may be determined for each scenario sample in the scenario database. More specifically, a size and/or shape of the transformation volume for a one scenario sample may differ from a size and/or shape of the transformation volume of another scenario sample. In other words, the transformation volume may be determined individually for each scenario sample. The transformation can be determined by performing a number of transformations of the corresponding sensor data, to determine to what extend said sensor data can be transformed with sufficient dependability. This may then result in an asymmetrical transformation volume, as shown herein. In the illustrated examples, the synthetic sensor data 416a-c can be seen as laying on the border of what can be validly, reliably and/or accurately achieved from transformations of the original sensor data 412. The border of the transformation volume 404 can then be determined based on the locations of the corresponding scenario embeddings 406a-c in the multi-dimensional space. As described above, the transformation volume 404 can be determined through an iterative approach. The iterative approach may comprise applying a multitude of transformations at different amplitudes, to see what the corresponding shift in the embedding space 400 is, and what volume this results in. The wording "amplitude" of transformation, may be understood as a degree or amount of transformation carried out, or a general metric of how much the original sensor data is modified.

In another example, the transformation module may be rule-based. In other words, the transformation module may be determined for each scenario sample based on pre-defined rules. As a non-limiting example, the transformation volume may be defined as a circle (in a 2D embedding space), or a sphere (in a 3D embedding space) with a given radii, and centered around the scenario sample. This is an example where the transformation volume is symmetric.

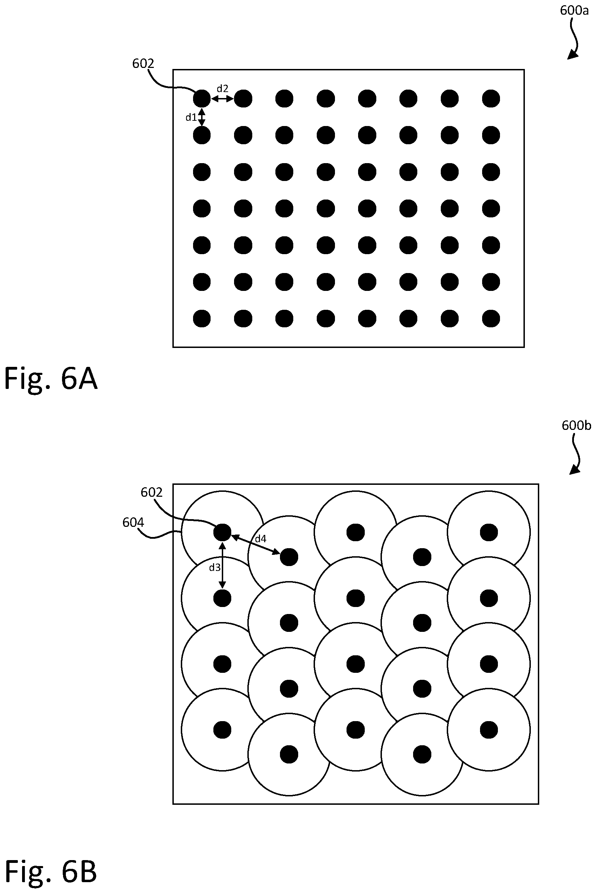

The disclosed technology then builds upon that synthetic sensor data corresponding to scenario embeddings within this transformation volume can be generated, using the transformation system 410. There is then no need to collect further raw sensor data samples from within this volume. This effect will be illustrated below in connection with Fig. 6A and 6B. Concretely, if there e.g. is need to test the ADS with a scenario within the transformation volume 404, this can be achieved by effectively transforming the original sensor data 412 associated with this scenario sample into synthetic sensor data that matches the requested scenario.

Figure 5 illustrates, by way of example, scenario samples in a multi-dimensional space 500. More specifically, Fig. 5 shows the process of generating synthetic sensor data of a query scenario, based on analysis in the multi-dimensional space 500.

In Fig. 5, a first through fifth scenario embedding 502a, 502b, 502c, 502d, 502e, associated with respective first through fifth scenario samples, are shown. Each of the first through fifth scenario embedding 502a-e is further shown with a respective first through fifth transformation volume 504a-e. As shown herein, the transformation volumes 504a-e may have different shapes and/or sizes. Additionally, the transformation volumes may be symmetrical (as shown by the first transformation volume 504a and the second transformation volume 504b). However, the transformation volumes may also be asymmetrical (as shown by the third transformation volume 504c, the fourth transformation volume 504d and the fifth transformation volume 504e).

As explained above, in connection with Fig. 1, the proposed method builds upon obtaining a request for a query scenario. A corresponding location in the multi-dimensional space 500 may then be determined. Fig. 5 shows a first query embedding 508a, a second query embedding 508b, and a third query embedding 508c. The first through third query embeddings 508a, 508b, 508c are associated with a respective first, second and third query scenario. Then, the process further involves identifying a scenario sample having an associated transformation volume which covers the query embedding.

In the case of the first query scenario, the fifth scenario sample can be identified as the scenario sample to be used for generating synthetic sensor data. This since the first query embedding 508a lies within the fifth transformation volume 502e. Appropriate transformations can then be applied to the fifth scenario sample to shift the original sensor data to the synthetic data of the queried scenario, based on the location of a scenario embedding of the synthetic sensor data in the multi-dimensional space. This transformation in the multi-dimensional space is indicated by an arrow between the fifth scenario embedding 502e and the first query embedding 508a.

Similarly, for the second query scenario, both the first scenario sample and the third scenario sample can be identified. This since the second query embedding 508b lies within both the first transformation volume 504a and the third transformation volume 504c. In line with the above, both the first scenario sample and the third scenario sample can be transformed into the second query scenario. However, these may require different transformations, and different extent of transformations, as indicated by the respective arrows. As described in connection with Fig. 1 above, further assessments can be made to decide which of the first and third scenario sample should be used to generate the synthetic sensor data. For example, the distance between the scenario embeddings and the query embedding may be used. In that case, the first scenario sample may be selected (or identified) as the one to use for generating synthetic sensor data, since the distance between the first scenario embedding 502a and the second query embedding 508b is shorter, than the distance between the third scenario embedding 502c and the second query embedding 508b. In another example, a probability distribution of the respective first and third transformation volumes 504a, 504c can be used. Say for instance that the probability of generating dependable synthetic sensor data decreases, the closer the query embedding is to the border of the transformation volume. In such case, the third scenario sample may be selected for synthetic sensor data generation, as the second query scenario 508b is closer to the border of the first transformation volume 504a, than the border of the third transformation volume 504c. It is to be noted that two or more identified scenario samples (in this example the first and third scenario sample) can be used together to generate the synthetic sensor data corresponding to the query scenario.

In the case of the third query scenario, no transformation volume of an existing scenario sample is found to cover the third query embedding 508c. In that case, a data collection request may be transmitted, indicative of the query scenario.

Figure 6A and 6B illustrates, by way of example, how a scenario space can be filled. More specifically, a comparison between Fig. 6A and 6B highlights an effect of the disclosed technology. Namely, that the scenario space can be exhausted using fewer scenario samples.

Fig. 6A shows a first scenario space 600a, which is populated with a set of scenario samples, with associated scenario embeddings 602. More specifically, Fig. 6A shows a case where the disclosed technology is not utilized. In this case, to exhaust the first scenario space 600a (i.e. to achieve coverage of all possible scenarios), some kind of grid sampling technique needs to be employed. The sensor data associated with each scenario embedding (corresponding to grid points with a certain distance (d1, d2) between neighboring points) would need to be both experienced, collected, and transmitted by the fleet of vehicles, and finally stored in the scenario database. Given that the distance between neighboring points has to be relatively small, this means that a lot of scenarios need to be collected. As explained in the foregoing, this is not feasible, given the vast amounts of possible scenarios, considering also the rareness of some scenarios.

Fig. 6B shows a second scenario space 600b, which leverages the techniques of the disclosed technology. More specifically, it leverages the transformation volumes 604 associated with each scenario embedding 602 of the scenario samples in the scenario database. Using the transformation system, the same scenario space can be exhausted with fewer data samples. This is due to the fact that the distance between neighboring scenario samples (d3, d4) can be greater than the distances (d1, d2) in the example of Fig. 6A. Put differently, the scenario space can be populated with a sparser collection of scenario samples. A grid sampling approach can still be applied, but since sensor data between the grid points can be generated, the grid can be made sparser. It should however be noted that a grid sampling approach need not to be performed. For example, since the transformation volumes may be non-symmetric, the scenario database may be populated by scenario samples in any possible distribution across the scenario space.

The disclosed technology has been presented above with reference to specific embodiments. However, other embodiments than the above described are possible and within the scope of the invention. Different method steps than those described above, performing the methods by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the methods according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

It should be noted that any reference signs do not limit the scope of the claims, that the invention may be at least in part implemented by means of both hardware and software, and that the same item of hardware may represent several "means" or "units".

## Claims

1. A computer-implemented method (100) for synthetic sensor data generation using a scenario database, wherein the scenario database comprising a plurality of scenario samples, each scenario sample comprising sensor data depicting a surrounding environment of a vehicle over a period of time, wherein each scenario sample is associated with a scenario embedding representing the scenario sample in a multi-dimensional space, wherein each scenario embedding is associated with a transformation volume in the multi-dimensional space, wherein the transformation volume is indicative of a set of possible transformed scenarios that can be generated from the corresponding scenario sample, the method (100) comprising:
obtaining (S102) a request specifying a query scenario, wherein the query scenario is associated with a query embedding representing the query scenario in the multi-dimensional space;
identifying (S106), within the scenario database, at least one scenario sample having a transformation volume within which the query embedding is located; and
in response to successfully identifying the at least one scenario sample, generating (S108) synthetic sensor data corresponding to the query scenario by transforming the sensor data of the at least one identified scenario sample to synthetic sensor data having an associated scenario embedding in the multi-dimensional space within a threshold distance from the query embedding.

2. The method (100) according to claim 1, wherein the identified scenario sample is further identified based on a distance between the associated scenario embedding and the query embedding in the multi-dimensional space.

3. The method (100) according to claim 1 or 2, further comprising dividing (S104) the query scenario into a plurality of sub-queries, each sub-query being associated with a respective sub-query embedding;
wherein the step of identifying (S106) comprises identifying, for each sub-query, a scenario sample having a transformation volume within which the associated sub-query embedding is located,
wherein the synthetic sensor data is generated (S108) by transforming a combination of the sensor data of each identified scenario sample.

4. The method (100) according to any one of the claims 1 to 3, wherein transforming the sensor data of the at least one identified scenario sample to synthetic sensor data is performed by:
(i) applying transformation to the sensor data, thereby generating updated sensor data;
(ii) determining a location of an embedding representing the updated sensor data within the multi-dimensional space;
repeating steps (i) and (ii) until the position of the updated sensor data is within the threshold distance of the query embedding, and
providing the updated sensor data as the synthetic sensor data.

5. The method (100) according to any one of the claims 1 to 4, wherein the transformation volume further indicates the set of possible transformed scenarios that can be generated from the scenario sample while satisfying a validity threshold, a reliability threshold and/or an accuracy threshold.

6. The method (100) according to any one of the claims 1 to 5, wherein transforming the sensor data of the at least one identified scenario sample to synthetic sensor data comprises feeding the sensor data to a Generative Adversarial Network or a Diffusion model, trained to output synthetic sensor data.

7. The method (100) according to any one of the claims 1 to 5, wherein each scenario sample in the database is further associated with a learned rendering-based scenario representation configured for subsequent rendering of synthetic sensor data associated with said scenario sample; and
wherein transforming the sensor data of the at least one identified scenario sample to synthetic sensor data comprises rendering the synthetic sensor data using the learned rendering-based scenario representation.

8. The method (100) according to claim 7, wherein the learned rendering-based scenario representation is a Neural Radiance Field or a Gaussian splatting-based model.

9. The method (100) according to any one of the claims 1 to 8, wherein the multi-dimensional space is a common space for two or more data modalities.

10. The method (100) according to any one of the claims 1 to 9, wherein the query scenario is represented by a text description describing the query scenario or a computer-simulated scenario.

11. The method (100) according to any one of the claims 1 to 10, wherein the sensor data of a scenario sample comprises sensor data of a first sensor type and sensor data of a second sensor type; and
wherein each scenario embedding is formed by aggregating a first sensor embedding generated for the sensor data of the first sensor type and a second sensor embedding generated for the sensor data of the second sensor type.

12. The method (100) according to any one of the claims 1 to 11, further comprising storing (S110) the synthetic sensor data for subsequent use in development of an automated driving system.

13. The method (100) according to any one of the claims 1 to 12, further comprising, in response to unsuccessfully identifying the scenario sample, transmitting (S112) a data collection request to one or more vehicles of a fleet of vehicles.

14. A computer program product comprising instructions, which when the program is executed by a computing device, causes the computing device to carry out the method (100) according to any one of the claims 1 to 13.

15. A computing device (200) for synthetic sensor data generation using a scenario database, wherein the scenario database comprising a plurality of scenario samples, each scenario sample comprising sensor data depicting a surrounding environment of a vehicle over a period of time, wherein each scenario sample is associated with a scenario embedding representing the scenario sample in a multi-dimensional space, wherein each scenario embedding is associated with a transformation volume in the multi-dimensional space, wherein the transformation volume is indicative of a set of possible transformed scenarios that can be generated from the corresponding scenario sample, the computing device (200) comprising control circuitry (202) configured to:
obtain a request specifying a query scenario, wherein the query scenario is associated with a query embedding representing the query scenario in the multi-dimensional space;
identify, within the scenario database, at least one scenario sample having a transformation volume within which the query embedding is located; and
in response to successfully identifying the at least one scenario sample, generate synthetic sensor data corresponding to the query scenario by transforming the sensor data of the at least one identified scenario sample to synthetic sensor data having an associated scenario embedding in the multi-dimensional space within a threshold distance from the query embedding.
